# EUROPEAN PATENT SPECIFICATION

(11) **EP 1 528 277 B1**
(45) Date of publication and mention of the grant of the patent: **09.01.2008**
(21) Application number: 04025131.6
(22) Date of filing: 22.10.2004
(51) Int. Cl.: F16D 29/00, F16D 27/00

(54) **Electromechanical actuator for a clutch of a motor vehicle**
Elektromechanischer Stellantrieb für eine Kraftfahrzeugkupplung.
Actionneur électromécanique pur embrayage de véhicule automobile.

(30) Priority: 31.10.2003 IT TO20030857
(43) Date of publication of application: 04.05.2005
(73) Proprietor: Sila Holding Industriale S.p.A., 10042 Nichelino(Torino) (IT)
(72) Inventor: Gardiol, Marco, 10060 San Secondo di Pinerolo (Torino) (IT); Mourad, Kamal, 10123 Torino (IT); Melis, Salvatore, 10098 Rivoli (Torino) (IT)
(74) Representative: Rondano, Davide

(56) References cited:
- EP-A2- 1 209 378
- GB-A- 2 347 723
- GB-A- 2 351 129

## Description

The present invention relates to an electromechanical actuator for a clutch of a motor vehicle provided with a robotized or automatic gearbox. In a motor vehicle of this type, no clutch pedal is provided for direct operation by the driver, but the clutch is operated by one or more actuators controlled by one or more electronic control units which manage the operation of both the gearbox and the clutch. Generally a first hydraulic actuator for operating the clutch directly and a second electrical actuator which controls the hydraulic actuator are provided, thus forming a servo-assisted control system.

As is well known, the main functions a clutch actuator has to carry out are to control the disengagement and engagement of the clutch and to stably maintain the disengaged position. From the results of tests conducted on motor vehicles it has been found that each of the aforesaid functions can be associated with a specific actuation time corresponding to acceptable driving comfort. The values of these actuation times have turned out to be different from each other and they cannot be reduced to a single mathematical function.

The electromechanical actuators used at the present time make use of operating mechanisms (of the rod and crank type, for example) which enable to achieve a single movement law and therefore do not meet the requirement of implementing specific movement laws for each stage of the clutch operating cycle.

An example of an electromechanical actuator for controlling a hydraulic actuator for operating a clutch of a motor vehicle is known from International Patent Application WO01/76905. The electromechanical actuator described in this prior art document comprises a mechanism for converting the rotary motion of a crank pin, rotated by an electric motor or geared motor about an axis of rotation different from its own axis, into the translational motion of an operating member which operates a piston of a hydraulic actuator. The motion conversion mechanism comprises a slidable plate having a shaped slot in which the crank pin engages. The plate is mounted in a guide orientated along a direction perpendicular to the axis of rotation of the crank pin and passing through this axis, and carries the aforesaid operating member at one end. A notch defining a stable rest position corresponding to the engaged clutch condition is formed in the plate. To fully disengage the clutch, the crank pin has to be rotated through 180°.

According to this known solution, the modification of the profile of the shaped slot in which the crank pin slides makes it possible to vary only the operating force as a result of the variation of the lever arm. Additionally, the linear movement of the operating member obtained with this mechanism is necessarily symmetrical at every 90-degree angular interval. Both of these constraints limit the possibility of modulating the disengagement and engagement of the clutch in a fully independent way.

Furthermore, with such an actuator it is necessary to use an electromagnet to enable the motion conversion mechanism to be kept stably in the clutch disengagement position for long periods (for example, where a gear has been engaged and the clutch is disengaged while the vehicle is stationary). This is because, even if the clutch operating force acts in a directional orthogonal to, and passing through, the axis of rotation of the electric motor or geared motor, the clutch disengagement position is not stable when the system is subject to stresses (such as vibrations).

It is also known that a clutch actuator must be capable of providing comfort characteristics which differ according to the user's requirements, and also according to the safety requirements of the vehicle (in case of emergency braking, for example). To enable these comfort characteristics to be obtained, the electric motor must be designed suitably, with allowance for the inertial masses of the motor itself and the components of the reduction unit. The required comfort characteristics are thus obtained by a control strategy which is not entirely compatible with the characteristics of the electric motor, since continuous inversions of polarization have to be controlled and the motor must therefore be oversized, thus increasing the power consumption and the breakaway starting current required from the battery of the motor vehicle.

The object of the present invention is to provide an electromechanical actuator for a clutch of a motor vehicle which makes it possible to overcome the drawbacks discussed above.

This and other objects are achieved according to the invention by means of an electromechanical actuator having the characteristics defined in the characterizing part of Claim 1. Further advantageous characteristics of the invention are defined in the dependent claims.

Thanks to an electromechanical actuator according to the present invention, the disengaged clutch position can be reached by a rotation of less than 180°. Furthermore, the stages of disengagement and engagement of the clutch can be modulated in a completely asymmetric way, in other words by making the disengagement and engagement times depend solely on the characteristic curve of the clutch (torque transmitted as a function of the position). It is also possible to dispense with an electromagnet or similar device for keeping the clutch disengaged for long periods.

The characteristics and advantages of the invention will become apparent from the following detailed description, provided purely by way of non limiting example, with reference to the attached drawings, in which:
Figure 1 is a perspective view of a gearbox for a motor vehicle, on which is mounted a hydraulic actuator according to the prior art for operating the clutch;
Figure 2 is a perspective view showing a section view of an electromechanical actuator according to the present invention, for controlling a hydraulic actuator for a clutch of the type shown in Figure 1;
Figure 3 is a diagram showing a possible operating characteristic which can be obtained with an electromechanical actuator according to the present invention; and
Figure 4 shows the profile of a cam-type operating member for the electromechanical actuator of Figure 2, designed in such a way as to provide the operating characteristic shown in Figure 3.

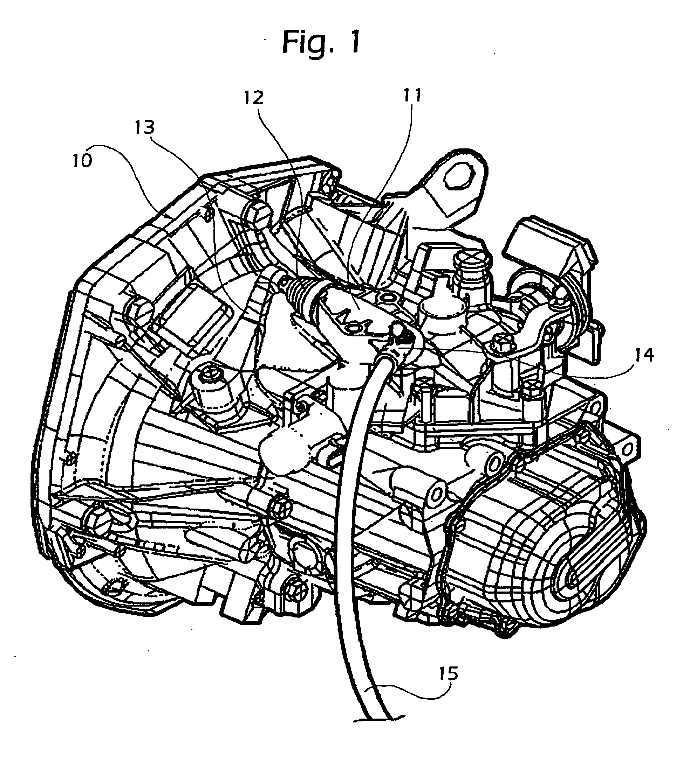

Figure 1 shows a gearbox of a motor vehicle, generally indicated 10, on which is mounted a hydraulic actuator 11 for operating the clutch (not shown). The hydraulic actuator 11 has, in a known way, a mechanical interface 12 (such as a piston rod), connected to a clutch operating lever 13, and a hydraulic interface 14, to which is connected a tube 15 which supplies the necessary hydraulic power to the actuator in the form of pressurized liquid.

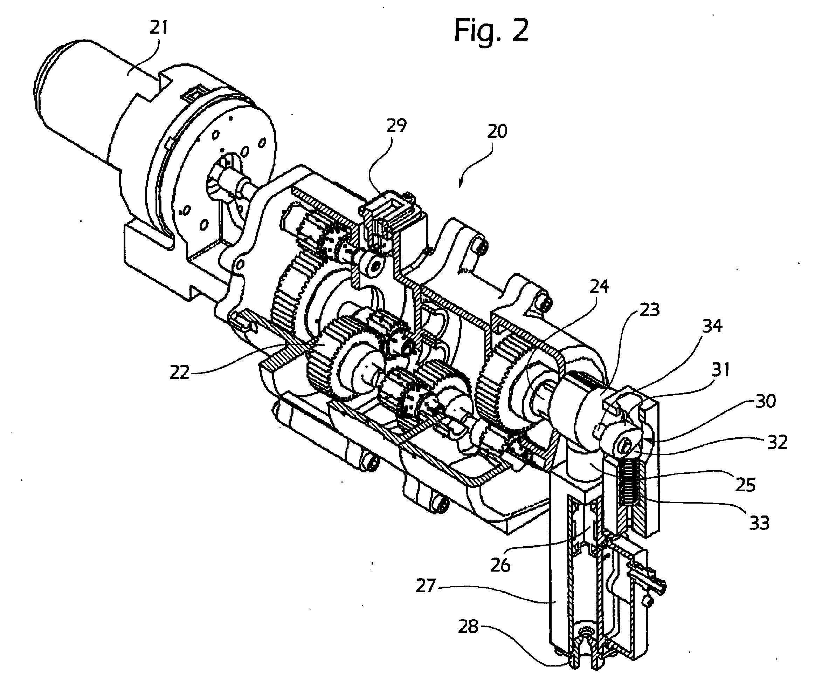

Figure 2 shows a preferred embodiment of an electromechanical actuator according to the invention, intended to control the operation of the hydraulic actuator 11 by setting the amount of liquid supplied to this latter.

The electromechanical actuator, generally indicated 20, substantially comprises an electric motor 21 (of a known type), reduction unit 22 (also of a known type, for example with a cascade of gears), and a cam-type operating member 23 mounted on an output shaft 24 of the reduction unit 22. The operating cam 23 has the function of converting the continuous rotary motion imparted to it by the motor 21 through the reduction unit 22 into the reciprocating rectilinear motion of a driven member 25 made in the form of a cylindrical element slidable in the direction of its own axis. In turn, the driven member 25 transmits the motion to a slider or plunger 26 housed in a hydraulic cartridge 27 connected by a connector 28 to the tube 15 which supplies the hydraulic actuator 11. The movement of the slider 26 causes a corresponding displacement of liquid in the tube 15 and consequently an exchange of hydraulic energy with the actuator 11.

A speed sensor 29 of a known type is provided to monitor the rotation speed of the electric motor 21. An absolute electronic sensor (not shown) is also provided to detect the disengaged position of the clutch. This sensor can be a linear sensor coupled to the driven member 25 or a rotation sensor coupled to the operating cam 23. The electric motor is speed-controlled in known ways (PWM or linear modulation). This speed is measured by means of the speed sensor 29 or by calculating the derivative of the linear displacement associated with the driven member 25. Since the kinematic law relating the rotary movement of the cam, or the reciprocating movement of the driven member, to the clutch disengagement/engagement travel is known, the position of the clutch at any instant can be found from the information provided by the aforesaid two sensors.

The electromechanical actuator 20 is also connected, in a known way, to an electronic control unit (not shown) which controls the power supply to the electric motor 21 and interfaces with the motor-vehicle area network.

The use of a cam-type operating member makes it possible to obtain different movement laws, which can be selected as desired, for the different stages of the clutch operating cycle.

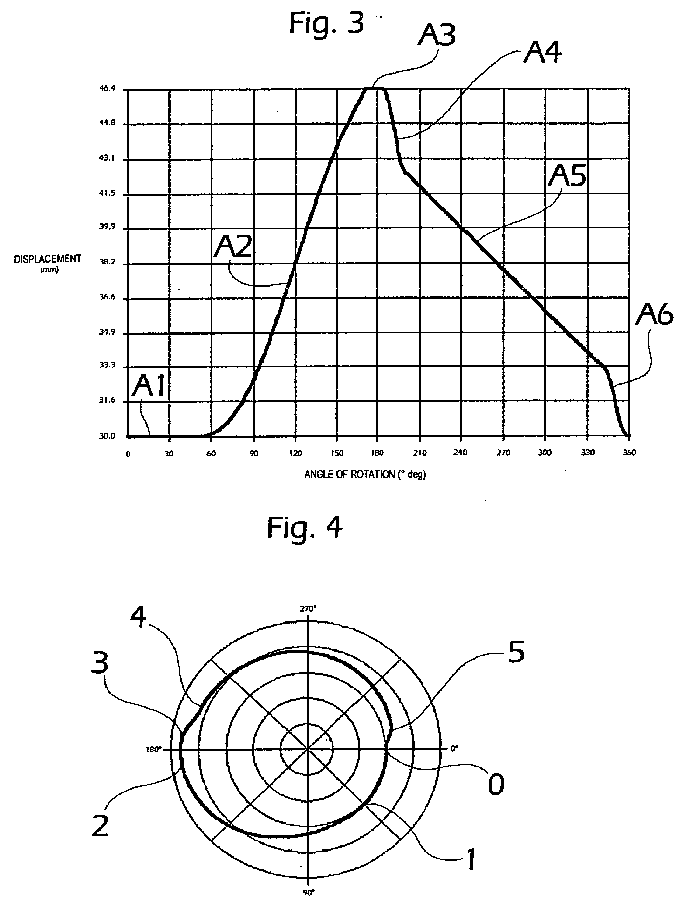

Figure 3 shows an example of an operating characteristic which can be obtained with an actuator according to the present invention, the operating cam of which has the profile shown in Figure 4. The operating characteristic shows the displacement of the driven member 25 (proportional to the displacement of the clutch operating lever 13) as a function of the angle of rotation of the cam-type operating member 23.

With reference to Figure 3, the operating cycle of the actuator can be divided into the stages listed below, each of which corresponds to a respective portion of the profile of the cam 23 (shown in Figure 4).

In a first stage, indicated A1, the clutch is kept in the engaged position for the first 46° of rotation of the cam 23. The presence of this non-operation stage facilitates the transient operation of the electric motor 21, since it does not impose additional resistant torque on the motor (except for that due to inertia and friction). This stage corresponds to a portion of the cam profile in the shape of an arc of a circumference, lying between points 0 and 1.

In the next stage, indicated A2, the disengagement of the clutch takes place and is completed slightly before 180° of rotation of the cam. This second stage corresponds to the portion of cam profile lying between points 1 and 2.

In a third stage, indicated A3, the clutch is kept in the disengaged position over a short angular interval extending astride of 180°, thus enabling the gear to be changed, or for a longer interval when the vehicle is stationary and a gear is engaged, in which case the mechanism is stopped in the middle of stage A3. This third stage corresponds to the portion of cam profile in the shape of an arc of a circumference, lying between points 2 and 3.

The third stage A3 is followed by the engagement of the clutch, which in the illustrated example is carried out in three distinct stages:
a fourth stage A4 in which a rapid partial engagement of the clutch takes place, as there is no transfer of torque to the transmission shaft during this stage;
a fifth stage A5 in which the engagement of the clutch is modulated; and
a sixth stage A6 in which the engagement of the clutch is completed rapidly, the speed of engagement no longer affecting the required comfort characteristics.

In this case, the engagement modulation stage A5 is carried out with a linear variation. The three stages A4, A5 and A6 correspond to the portions of the cam profile lying between points 3 and 4, 4 and 5, and 5 and 0, respectively.

Clearly, however, by suitably shaping the profile of the operating cam 23 it is possible to obtain any desired operating characteristic of the actuator.

According to a preferred embodiment of the invention, the actuator 20 is provided with an auxiliary device 30 for increasing the speed of disengagement of the clutch (portion A2 of the operating characteristic described above). With reference to Figure 2, the auxiliary device 30 comprises an auxiliary cam 31 acting on a cap member 32 loaded by a calibrated spring 33. The auxiliary cam 31 is connected through a shaft 33 to the operating cam 23 in such a way that it is fast for rotation with the latter.

The profile of the auxiliary cam 31 is suitably shaped so that the spring 33 is compressed, thus storing elastic energy, during the engagement stage of the clutch, and extends, thus giving up the stored elastic energy, during the disengagement stage of the clutch. In this way the speed of disengagement of the clutch is increased for the same power of the electric motor of the actuator, or alternatively a less powerful electric motor can be used without reducing the speed of disengagement.

Preferably, the profile of the auxiliary cam 31 is also shaped in such a way that the spring 33 is loaded again during the final stage A6 of the engagement of the clutch. In fact, in this way the operation of re-loading the spring does not interfere with the stages A3, A4 and A5 of the clutch operating cycle.

It should also be made clear that such an auxiliary device can be fitted and removed without altering the kinematic chain from the motor to the clutch.

Finally, the electromechanical actuator 20 is capable of carrying out the functions of taking up fitting and self-adjustment play following wear on the clutch disc. These functions are carried out in a known way by the hydraulic cartridge 27, since the variations of the volume of liquid in the hydraulic actuator 11 due both to the fitting and to the wear of the clutch disc are compensated by the cartridge itself, by absorption or supplementation of the liquid.

Naturally, the principle of the invention remaining unchanged, embodiments and details of construction may be varied widely from those described and illustrated purely by way of non limiting example.

## Claims

1. Electromechanical actuator (20) for a clutch of a motor vehicle, of the type capable of controlling the operation of a hydraulic actuator (11) for operating (13) the clutch; the electromechanical actuator (20) comprising an electric motor (21), a reduction unit (22) and a mechanism (23, 25) for converting the rotary motion of the motor (21) into the reciprocating rectilinear motion of a driven member (25) for transmitting its movement to a slider or plunger (26) housed in a hydraulic cartridge (27) for supplying the hydraulic actuator (11);
**characterized in that** the said motion conversion mechanism includes a cam-type operating member (23) rotated by the motor (21) through the reduction unit (22) and acting on the driven member (25), the said cam member (23) having a profile comprising, in succession, a first portion (0-2) designed to cause the disengagement of the clutch, a second portion (2-3) designed to keep the clutch in the disengaged position, and a third portion (3-0) designed to cause the engagement of the clutch.

2. Electromechanical actuator according to Claim 1, wherein the said first portion (0-2) of the profile of the cam-type operating member (23) includes a first segment in the form of an arc of a circumference (0-1) for keeping the clutch in the engaged position in a first angular interval of rotation of the cam member (23) and a second segment (1-2) suitably shaped to cause the disengagement of the clutch with a specified movement law.

3. Electromechanical actuator according to Claim 1 or 2, wherein the said third portion (3-0) of the profile of the cam-type operating member (23) includes an intermediate portion (4-5) suitably shaped to cause the engagement of the clutch with a specified movement law.

4. Electromechanical actuator according to Claim 3, wherein the said third portion (3-0) of the profile of the cam-type operating member (23) further comprises an initial portion (3-4) and a final portion (5-0), respectively preceding and following the intermediate portion (4-5), and designed, respectively, to initiate and complete the engagement of the clutch at a greater speed than that of the intermediate portion (4-5).

5. Electromechanical actuator according to Claim 3, further comprising an auxiliary device (30) for assisting the cam-type operating member (23) during the stage of disengagement of the clutch.

6. Electromechanical actuator according to Claim 5, wherein the said auxiliary device (30) comprises an auxiliary cam (31) which acts on a slidable member (32) loaded by a spring (33) and which is drivingly connected for rotation with the operating cam (23), the profile of the auxiliary cam (31) being shaped so that the spring (33) stores elastic energy, during the stage of engagement of the clutch, and gives up to the member (32) the elastic energy stored, during the stage of disengagement of the clutch.

7. Electromechanical actuator according to Claim 4 and Claim 5, wherein the profile of the auxiliary cam (31) is shaped so that the spring (33) stores elastic energy during the final stage of engagement of the clutch, corresponding to the final portion (5-0) of the third portion of the profile of the cam-type operating member (23).

8. Electromechanical actuator according to any one of the preceding claims, further comprising a speed sensor (29) for measuring the rotation speed of the electric motor (21) and a position sensor associated with the driven member (25) or with the cam-type operating member (23).

9. Electromechanical actuator according to Claim 8, wherein the electric motor (21) is speed-controlled, the speed being measured by means of the speed sensor (29) or by calculating the derivative of the linear displacement of the driven member (25) measured by means of the position sensor associated thereto.

## Patentansprüche

1. Elektromechanischer Aktuator (20) für eine Kupplung eines Kraftfahrzeugs, und zwar von dem Typ, der fähig ist, den Betrieb eines hydraulischen Aktuators (11) für die Bedienung (13) der Kupplung zu steuern; wobei der elektromechanische Aktuator (20) einen Elektromotor (21), eine Reduktionseinheit (22) und einen Mechanismus (23, 25) zum Umwandeln der Drehbewegung des Motors (21) in die geradlinige Hin- und Herbewegung eines angetriebenen Bauglieds (25) zum Übertragen von dessen Bewegung zu einem in einer hydraulischen Kartusche (27) untergebrachten Schieber oder Plunger (26) zwecks Versorgung des hydraulischen Aktuators (11) umfasst;
**dadurch gekennzeichnet, dass** der Bewegungsumwandlungsmechanismus ein nockenartiges Betätigungsglied (23) umfasst, das vom Motor (21) durch die Reduktionseinheit (22) gedreht wird und auf das angetriebene Bauglied (25) einwirkt, wobei das Nockenglied (23) ein Profil aufweist, das nacheinander einen ersten Abschnitt (0-2), der dazu ausgelegt ist, das Ausrücken der Kupplung zu bewirken, einen zweiten Abschnitt (2-3), der dazu ausgelegt ist, die Kupplung in der ausgerückten Position zu halten, und einen dritten Abschnitt (3-0), der dazu ausgelegt ist, das Einrücken der Kupplung zu bewirken, umfasst.

2. Elektromechanischer Aktuator gemäß Anspruch 1, wobei der erste Abschnitt (0-2) des Profils des nockenartigen Betätigungsglieds (23) ein erstes Segment in Form eines Umfangsbogens (0-1) zum Halten der Kupplung in der eingerückten Position in einem ersten Winkelintervall der Drehung des Nockenglieds (23) umfasst, sowie ein zweites Segment (1-2), das passend geformt ist, um das Ausrücken der Kupplung mit einem festgelegten Bewegungsgesetz zu bewirken.

3. Elektromechanischer Aktuator gemäß Anspruch 1 oder 2, wobei der dritte Abschnitt (3-0) des Profils des nockenartigen Betätigungsglieds (23) einen Zwischenabschnitt (4-5) umfasst, der passend geformt ist, um das Einrücken der Kupplung mit einem festgelegten Bewegungsgesetz zu bewirken.

4. Elektromechanischer Aktuator gemäß Anspruch 3, wobei der dritte Abschnitt (3-0) des Profils des nockenartigen Betätigungsglieds (23) weiters einen Anfangsabschnitt (3-4) und einen Endabschnitt (5-0) umfasst, welche dem Zwischenabschnitt (4-5) vorausgehen bzw. nachfolgen und dazu ausgelegt sind, das Einrücken der Kupplung mit einer größeren Geschwindigkeit als jener des Zwischenabschnitts (4-5) zu beginnen bzw. zu beenden.

5. Elektromechanischer Aktuator gemäß Anspruch 3, weiters umfassend eine Hilfsvorrichtung (30) zum Unterstützen des nockenartigen Betätigungsglieds (23) während der Phase des Ausrückens der Kupplung.

6. Elektromechanischer Aktuator gemäß Anspruch 5, wobei die Hilfsvorrichtung (30) eine Hilfsnocke (31) umfasst, die auf ein von einer Feder (33) belastetes, verschiebbares Bauglied (32) einwirkt und zur Drehung mit der Betätigungsnocke (23) treibend angeschlossen ist, wobei das Profil der Hilfsnocke (31) so geformt ist, dass die Feder (33) während der Phase des Einrückens der Kupplung elastische Energie speichert und die gespeicherte elastische Energie während der Phase des Ausrückens der Kupplung an das Bauglied (32) abgibt.

7. Elektromechanischer Aktuator gemäß Anspruch 4 und Anspruch 5, wobei das Profil der Hilfsnocke (31) so geformt ist, dass die Feder (33) während der letzten Phase des Einrückens der Kupplung elastische Energie speichert, und zwar übereinstimmend mit dem letzten Abschnitt (5-0) des dritten Abschnitts des Profils des nockenartigen Betätigungsglieds (23).

8. Elektromechanischer Aktuator gemäß einem der vorhergehenden Ansprüche, weiters umfassend einen Drehzahlfühler (29) zum Messen der Drehgeschwindigkeit des Elektromotors (21) und einen Positionssensor, der mit dem angetriebenen Bauglied (25) oder mit dem nockenartigen Betätigungsglied (23) verbunden ist.

9. Elektromechanischer Aktuator gemäß Anspruch 8, wobei der Elektromotor (21) drehzahlgeregelt ist, wobei die Drehzahl mit Hilfe des Drehzahlfühlers (29) gemessen wird, oder durch Berechnung der Abweichung der linearen Verschiebung des angetriebenen Bauglieds (25), welche mit Hilfe des damit verbundenden Positionssensors gemessen wird.

## Revendications

1. Actionneur électromécanique (20) pour un embrayage de véhicule à moteur, du type capable de commander le fonctionnement d'un actionneur hydraulique (11) pour actionner (13) l'embrayage, l'actionneur électromécanique (20) comprenant un moteur électrique (21), une unité de réduction (22) et un mécanisme (23, 25) pour convertir le mouvement rotatif du moteur (21) en un mouvement de va et vient rectiligne d'un élément entraîné (25) pour transmettre son mouvement à un curseur ou piston (26) logé dans une cartouche hydraulique (27) pour alimenter l'actionneur hydraulique (11) ;
**caractérisé en ce que** ledit mécanisme de conversion du mouvement comprend un élément d'actionnement de type came (23) mis en rotation par le moteur (21) via l'unité de réduction (22) et agissant sur l'élément entraîné (25), ledit élément de type came (23) ayant un profil comprenant, en succession, une première partie (0-2) conçue pour provoquer le débrayage de l'embrayage, une deuxième partie (2-3) conçue pour maintenir l'embrayage dans la position débrayée, et une troisième partie (3-0) conçue pour provoquer la mise en prise de l'embrayage.

2. Actionneur électromécanique selon la revendication 1, dans lequel ladite première partie (0-2) du profil de l'élément d'actionnement de type came (23) comprend un premier segment ayant la forme d'un arc de cercle (0-1) pour maintenir l'embrayage dans la position embrayée dans un premier intervalle de rotation angulaire de l'élément de type came (23) et un deuxième segment (1-2) ayant une forme appropriée pour provoquer le débrayage de l'embrayage avec une loi de mouvement spécifiée.

3. Actionneur électromécanique selon la revendication 1 ou 2, dans lequel ladite troisième partie (3-0) du profil de l'élément d'actionnement de type came (23) comprend une partie intermédiaire (4-5) ayant une forme appropriée pour provoquer la mise en prise de l'embrayage avec une loi de mouvement spécifiée.

4. Actionneur électromécanique selon la revendication 3, dans lequel ladite troisième partie (3-0) du profil de l'élément d'actionnement de type came (23) comprend en outre une partie initiale (3-4) et une partie finale (5-0), respectivement précédant et suivant la partie intermédiaire (4-5), et conçues respectivement pour amorcer et achever la mise en prise de l'embrayage à une vitesse plus grande que celle de la partie intermédiaire (4-5).

5. Actionneur électromécanique selon la revendication 3, comprenant en outre un dispositif auxiliaire (30) pour assister l'élément d'actionnement de type came (23) pendant l'étape de débrayage de l'embrayage.

6. Actionneur électromécanique selon la revendication 5, dans lequel ledit dispositif auxiliaire (30) comprend une came auxiliaire (31) qui agit sur un élément coulissant (32) contraint par un ressort (33) et qui est accouplé en entraînement pour tourner avec la came d'actionnement (23), le profil de la came auxiliaire (31) ayant une forme prévue pour que le ressort (33) emmagasine de l'énergie élastique, pendant l'étape de mise en prise de l'embrayage, et cède à l'élément (32) l'énergie élastique emmagasinée, pendant l'étape de débrayage de l'embrayage.

7. Actionneur électromécanique selon les revendications 4 et 5, dans lequel le profil de la came auxiliaire (31) a une forme prévue pour que le ressort (33) emmagasine de l'énergie élastique pendant l'étape finale de mise en prise de l'embrayage, correspondant à la partie finale (5-0) de la troisième partie du profil de l'élément d'actionnement de type came (23).

8. Actionneur électromécanique selon l'une quelconque des revendications précédentes, comprenant en outre un capteur de vitesse (29) pour mesurer la vitesse de rotation du moteur électrique (21) et un capteur de position associé à l'élément entraîné (25) ou à l'élément d'actionnement de type came (23).

9. Actionneur électromécanique selon la revendication 8, dans lequel la vitesse du moteur électrique (21) est régulée, la vitesse étant mesurée au moyen du capteur de vitesse (29) ou en calculant la dérivée du déplacement linéaire de l'élément entraîné (25) mesuré au moyen du capteur de position qui lui est associé.
